(19) **Europäisches Patentamt / European Patent Office / Office européen des brevets**

(11) **EP 4 734 059 A1**

(12) **EUROPEAN PATENT APPLICATION**
published in accordance with Art. 153(4) EPC

(43) Date of publication:
**29.04.2026 Bulletin 2026/18**

(21) Application number: **24855495.8**

(22) Date of filing: **05.07.2024**

(51) International Patent Classification (IPC):
**G06T 7/62** (2017.01)   **G06V 10/26** (2022.01)

(52) Cooperative Patent Classification (CPC):
**Y02T 10/40**

(86) International application number:
**PCT/CN2024/103937**

(87) International publication number:
**WO 2025/039766 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.08.2023 CN 202311047066**

(71) Applicant: **HANGZHOU LANXIN ROBOTICS CO., LTD.**
**Hangzhou, Zhejiang 311121 (CN)**

(72) Inventors:
- **MA, Peifu**
  **Hangzhou, Zhejiang 311121 (CN)**
- **XU, Yongkui**
  **Hangzhou, Zhejiang 311121 (CN)**
- **WANG, Jikai**
  **Hangzhou, Zhejiang 311121 (CN)**
- **ZHENG, Lingjie**
  **Hangzhou, Zhejiang 311121 (CN)**
- **YANG, Yang**
  **Hangzhou, Zhejiang 311121 (CN)**

(74) Representative: **Vogelbruch, Keang**
**VOGELBRUCH Patentanwaltsgesellschaft mbH**
**Paul-Gerhardt-Straße 16**
**40593 Düsseldorf (DE)**

(54) **REAL-TIME ONLINE CARGO VOLUME RECOGNITION METHOD, SYSTEM, AND DEVICE, AND MEDIUM**

(57)   The present application relates to a real-time online cargo volume recognition method, system, and device, and a medium. The method comprises: collecting, by means of a camera, a depth image and a color image of a set area comprising a cargo; introducing a median filter to remove noise pixels in the depth image, and aligning the color image with the filtered depth image on the basis of internal and external parameters of the camera to obtain an aligned color image; on the basis of color, light, and grayscale differences between the cargo and a non-cargo object, using a pre-trained YOLACT model to perform instance segmentation on the aligned color image, and generating a cargo mask; and performing edge fitting, surface extraction, and background separation of the cargo by means of the aligned color image, the filtered depth image and the cargo mask, so as to determine the volume of the cargo. Thus, the present application has high stability and robustness, reliable data can be obtained regardless of the placement location and the placement direction of a cargo, and the working efficiency can be improved.

**FIG. 1**

Figure steps:
- acquiring a depth image and a color image of a preset region comprising cargo through a camera — S1
- introducing a median filter to remove noise pixels in the depth image, combining internal and external parameters of the camera to align the color image and the filtered depth image, obtaining an aligned color image — S2
- performing instance segmentation on the aligned color image according to differences of color, illumination, grayscale and others between cargo and non-cargo through a pre-trained YOLACT model, and generating a cargo mask — S3
- utilizing the aligned color image, the filtered depth image, and a cargo mask to perform cargo edge fitting, surface extraction, and background separation, thereby realizing determination of cargo volume — S4

**Description**

**CROSS-REFERENCE TO RELATED APPLICATIONS**

The present invention claims the priority to the Chinese patent application No. 202311047066.1, filed with the Chinese Patent Office on August 21, 2023, and entitled "REAL-TIME ONLINE CARGO VOLUME RECOGNITION METHOD, SYSTEM, AND DEVICE, AND MEDIUM", the contents of which are incorporated herein by reference in entirety.

**TECHNICAL FIELD**

The present invention relates to the technical field of cargo identifications (recognitions), and particularly relates to a real-time online cargo volume identification method, system, device, and medium.

**BACKGROUND ART**

At present, sorting operations of distribution centers have gradually transformed from traditional manual sorting to automatic sorting, and volume calculation still is a major problem in the industry. A traditional line-scan structured-light scheme has high cost and is difficult to promote for commercial use in small-scale logistics centers.

Therefore, cargo sorting mostly is performed according to intuitive vision of couriers, and extremely dense and crowded parcels have become common phenomena. However, human intuitive detection of object size easily produces errors. With the increase of express business volume, it is necessary to propose an effective cargo volume measurement scheme, and accurate measurement of cargo volume can help couriers perform cargo sorting operations better and improve efficiency of sorting work.

Some existing technologies make certain contributions to solving the above problems, such as: "A Three-Dimensional Measurement Method for Binocular Endoscope Based on Deep Learning (English)", Yu Hao et al.; "Frontiers of Information Technology & Electronic Engineering", Issue 04, 2022, and this document proposes a binocular three-dimensional (3D) measurement method based on deep learning, which uses a 3D scanner to acquire 3D data of a target, simulates a binocular camera through 3D rendering software, and creates a simulated binocular image dataset to train a disparity estimation model for 3D measurement, thereby providing accurate and reliable dimensions.

"A Maize Plant Height Measurement Method Based on RGB-D Camera", Qiu Ruicheng et al.; "Transactions of the Chinese Society for Agricultural Machinery", Issue S1, 2017, and this document describes a method using an RGB-D camera to measure height of maize plants, which firstly uses a light-field rendering algorithm based on EPI to process a color image and locate its center position, then clusters point cloud data to extract the plant, uses a skeleton detection algorithm to extract a highest point of a central leaf of the plant, and finally calculates a height difference between a highest point from ground and the central leaf to measure plant height. Shi Shuai et al. propose a three-dimensional surface reconstruction and body size measurement system based on multi-view RGB-D cameras. The system uses a Kinect depth camera to acquire freely walking point clouds from three different views, namely a top view, a left view, and a right view. Rectangular cuboids are used to acquire registration parameters, reconstruct three local point clouds, then measurement positions are determined by utilizing projection distributions of point clouds in different directions, thereby accurately measuring key parameters such as body length, body height, body width, and abdominal circumference. The system also develops a polar coordinate transformation to improve accuracy of abdominal circumference measurement. "Assessment and Calibration of a RGB-D Camera (Kinect v2 Sensor) Towards a Potential Use for Close-Range 3D Modeling", Elise Lachat et al., "Remote Sensing", and this document considers applicability and accuracy of RGB-D cameras in close-range 3D modeling. It studies application of the latest Kinect v2 sensor in three-dimensional reconstruction of small objects, and discusses advantages and disadvantages of Kinect v2 compared with the first version sensor and photogrammetry.

In summary, regardless of system complexity or measurement speed, the above methods are difficult to meet practical requirements of fast and simple realization of cargo volume measurement, and are difficult to apply to assembly lines of cargo sorting.

**SUMMARY**

(I) Technical problem to be solved

In view of the above defects and deficiencies of existing technology, the present invention provides a real-time online cargo volume identification method, system, device, and medium, and solves a technical problem that existing technology is difficult to rapidly, simply, and accurately identify cargo volume.

(II) Technical solution

In order to achieve the above objective, main technical solution adopted by the present invention are as follows.

In a first aspect, embodiments of the present invention provide a real-time online identification method for cargo volume, including steps of:

acquiring, by a camera, a depth image and a color image of a set region including cargo;

introducing a median filter to remove noise pixels in the depth image, combining intrinsic and extrinsic (internal and external) parameters of the camera to align the color image and the filtered depth image, and obtaining an aligned color image;

perform instance segmentation on the aligned color image according to differences of color, illumination, and grayscale between the cargo and a non-cargo object using a pre-trained YOLACT model, and generating a cargo mask; and

utilizing the aligned color image, the filtered depth image, and a cargo mask to perform edge fitting, surface extraction, and background separation of the cargo, so as to realize determination of cargo volume.

Optionally, the step of introducing a median filter to remove noise pixels in the depth image, combining intrinsic and extrinsic parameters of the camera to align the color image and a filtered depth image, obtaining an aligned color image, includes:

removing the noise pixels in the depth image through introducing the median filter, and obtaining the filtered depth image;

adopting an RGB-D camera to shoot a set calibration board at multiple positions, and obtaining calibration color images and calibration infrared images;

performing calibration of the intrinsic and extrinsic parameters for the calibration color images and the calibration infrared images, and after excluding images not satisfying a relative position range of RGB relative to D and images with calibration result error exceeding a threshold, obtaining an intrinsic and extrinsic parameter matrix of the RGB-D camera; and

aligning, according to a Zhang Zhengyou calibration principle, pixel points of the color image with relative positions of the filtered depth image based on an obtained intrinsic and extrinsic parameter matrix, and obtaining the aligned color image.

Optionally, before the step of performing instance segmentation on the aligned color image according to differences of color, illumination, and grayscale between cargo and non-cargo using a pre-trained YOLACT model, and generating a cargo mask, the method further includes:

acquiring a dataset previously shot through the camera;

using a Labelme tool to perform labeling of target cargo for part of images in the dataset to form a coco-format dataset as a training set of a pre-set YOLACT model; and

using remaining images in the dataset excluding the training set, after alignment operation, as a test set of the pre-set YOLACT model, wherein

the dataset includes the depth images with a resolution of $640 \times 480$ and the color images of four-channel RGBA with a resolution of $1080 \times 1920$, and the number of the depth images and the color images in both the training set and the test set is 1:1.

Optionally, the step of performing instance segmentation on the aligned color image according to differences of color, illumination, and grayscale between the cargo and a non-cargo object using a pre-trained YOLACT model, and generating a cargo mask includes:

training the YOLACT model based on the training set, and generating corresponding weight parameters;

utilizing generated weight parameters to perform cargo identification and instance segmentation on the aligned color image, obtaining the cargo and the cargo mask; using a rectangular box to outline detected cargo, and labeling a corresponding confidence on the rectangular box; and

using generated cargo mask to mark the detected cargo.

Optionally, the step of utilizing the aligned color image, the filtered depth image, and a cargo mask to perform edge fitting, surface extraction, and background separation of the cargo, so as to realize determination of cargo volume includes steps of:

extracting a boundary line of the cargo using the aligned color image and the filtered depth image;
separating the cargo from a background in the aligned color image based on a fitted boundary line;
utilizing an obtained cargo mask to realize surface extraction;
optimizing the cargo mask based on depth values of an extracted mask, and obtaining a new mask; and
determining cargo volume according to the new mask, the filtered depth image, an intrinsic parameter matrix of the RGB-D camera, and pixel information in the new mask.

Optionally, the step of optimizing the cargo mask based on depth values of an extracted mask, and obtaining a new mask includes:

initializing a numpy array with a same resolution as the depth image for storing the new mask;
extracting all depth values of a mask portion in the depth image, obtaining a median value of all depth values as an upper surface depth value of the cargo mask; and
obtaining the new mask according to the numpy array and the upper surface depth value of the cargo mask.

Optionally, the step of determining cargo volume according to the new mask, the filtered depth image, an intrinsic parameter matrix of the RGB-D camera, and pixel information in the new mask includes:

obtaining an actual distance between any two pixel points in the filtered depth image according to the new mask, the filtered depth image, and the intrinsic parameter matrix of the RGB-D camera;
selecting two coordinate points in a longest continuous row in the new mask, calculating positions of the two coordinate points in a world coordinate system, and calculating the distance between the two coordinate points;
dividing the distance between the two coordinate points by the number of non-zero pixel points therebetween to obtain length of each pixel;
obtaining an area of each pixel according to the a length of each pixel;
calculating a volume of the cargo based on the filtered depth image and intrinsic parameters of the depth camera, combined with the number of non-zero pixel points in the new mask, heights of the non-zero pixel points, and the area of each pixel.

In a second aspect, embodiments of the present invention provide a real-time online identification system for cargo volume, including:

an image acquisition module, configured to acquire, by a camera, a depth image and a color image of a set region including cargo;
a noise removal and image alignment module, configured to introduce a median filter to remove noise pixels in the depth image, combine intrinsic and extrinsic parameters of the camera to align the color image and the filtered depth image, and obtain an aligned color image;
a model invoking and mask generation module, configured to perform instance segmentation on the aligned color image according to differences of color, illumination, grayscale and others between cargo and non-cargo through a pre-trained YOLACT model, and generate a cargo mask; and
a cargo volume calculation module, configured to utilize the aligned color image, the filtered depth image, and a cargo mask to perform cargo edge fitting, surface extraction, and background separation, thereby realizing determination of cargo volume.

In a third aspect, embodiments of the present invention provide a real-time online identification device for cargo volume, including: at least one database; an RGB-D depth camera, configured to acquire a depth image and a color image of a set region including cargo and transmit the images to the database; and a memory in communication connection with the at least one database. The memory stores instructions executable by the at least one database, and the instructions are executed by the at least one database to enable the at least one database to execute the real-time online identification method for cargo volume described above.

In a fourth aspect, embodiments of the present invention provide a computer-readable medium, wherein the computer-executable instructions are stored on the computer-readable medium, and the executable instructions implement the real-time online identification method for cargo volume described above when executed by a processor.

(III) Beneficial effects

The beneficial effects of the present invention are the following. The present invention implements visualization of depth images based on an RGB-D camera and alignment of depth data to RGB data, cargo identification and instance-level segmentation of RGB images based on a Yolact model, and fitting of object edges and upper surfaces according to depth images and mask information, finally implementing rapid, simple, and accurate measurement of cargo volume under a premise of not performing large modification on an assembly line itself. Therefore, the present invention has high stability and robustness, and reliable data can be obtained regardless of cargo placement position and placement orientation, which helps improve work efficiency.

## BRIEF DESCRIPTION OF DRAWINGS

FIG. 1 is a schematic flowchart of a real-time online identification method for cargo volume provided by embodiments of the present invention;

FIG. 2 is a schematic diagram of a calibration flow of a depth image and a color image of a real-time online identification method for cargo volume provided by embodiments of the present invention;

FIG. 3 is a schematic diagram of a detailed flow of step S2 of a real-time online identification method for cargo volume provided by embodiments of the present invention;

FIG. 4(a) is a depth image without median filtering of a real-time online identification method for cargo volume provided by embodiments of the present invention;

FIG. 4(b) is a depth image after median filtering provided by the embodiment of FIG. 4(a);

FIG. 5(a) is an unaligned color image of a real-time online identification method for cargo volume provided by embodiments of the present invention;

FIG. 5(b) is an aligned color image provided by the embodiment of FIG. 5(a);

FIG. 6 is a color point cloud file generated after alignment of a real-time online identification method for cargo volume provided by embodiments of the present invention;

FIG. 7 is a schematic diagram of a detailed flow before step S3 of a real-time online identification method for cargo volume provided by embodiments of the present invention;

FIG. 8 is a schematic diagram of cargo labeling of a real-time online identification method for cargo volume provided by embodiments of the present invention;

FIG. 9 is a schematic diagram of a detailed flow of step S3 of a real-time online identification method for cargo volume provided by embodiments of the present invention;

FIG. 10 is a flowchart of cargo identification of a color image based on a YOLACT model of a real-time online identification method for cargo volume provided by embodiments of the present invention;

FIG. 11 is a schematic diagram of cargo identification results of a real-time online identification method for cargo volume provided by embodiments of the present invention;

FIG. 12 is a flowchart of cargo volume calculation based on an aligned image and a mask of a real-time online identification method for cargo volume provided by embodiments of the present invention;

FIG. 13 is a schematic diagram of a detailed flow of step S4 of a real-time online identification method for cargo volume provided by embodiments of the present invention;

FIG. 14(a) is a schematic diagram of a mask before optimization of a real-time online identification method for cargo volume provided by embodiments of the present invention; and

FIG. 14(b) is a schematic diagram of an optimized mask in the embodiment provided by FIG. 14(a).

## DETAILED DESCRIPTION OF EMBODIMENTS

For better explaining the present invention for ease of understanding, specific embodiments are described in detail below in conjunction with the drawings.

Before this, for ease of understanding technical solutions provided by the present invention, some concepts are introduced below.

Edge fitting: edge fitting refers to extracting boundary lines of an object or a region from image data or point cloud data. This can be implemented by various edge detection algorithms, such as a Canny edge detection or a Sobel operator. These algorithms can identify positions with large gray-level changes in an image or large depth changes in a point cloud, thereby generating an edge line or an edge-point set.

Surface extraction: surface extraction refers to extracting surface information of an object or a scene from point cloud data or voxel grid data. This can be implemented by various algorithms, such as point cloud registration, point cloud clustering, or triangulation. By these algorithms, discrete point cloud data can be converted into a continuous three-dimensional surface representation, thereby implementing modeling and analysis of the object.

Background separation: background separation refers to separating a foreground object from a background in image data or point cloud data. This can be implemented by background modeling, image segmentation, or threshold segmentation. These methods separate the foreground object from the background according to color, texture, depth, or other features of pixels for further analysis and processing.

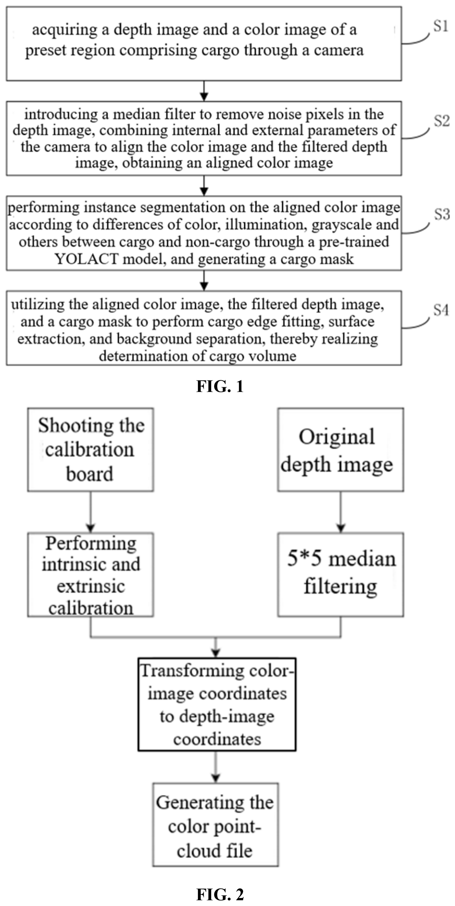

As shown in FIG. 1, a real-time online identification method for cargo volume provided by embodiments of the present invention includes: firstly, acquiring, by a camera, a depth image and a color image of a set region including cargo; secondly, introducing a median filter to remove noise pixels in the depth image, combining intrinsic and extrinsic parameters of the camera to align the color image and the filtered depth image, obtaining an aligned color image; thirdly, performing instance segmentation on the aligned color image according to differences of color, illumination, grayscale and others between cargo and non-cargo through a pre-trained YOLACT model, and generating a cargo mask; and finally, utilizing the aligned color image, the filtered depth image, and a cargo mask to perform cargo edge fitting, surface extraction, and background separation, thereby realizing determination of cargo volume.

The present invention implements deep-image visualization of depth images based on an RGB-D camera and alignment of depth data to RGB data, cargo identification and instance-level segmentation of RGB images based on a Yolact model, and fitting of object edges and upper surfaces according to depth images and mask information, finally implementing rapid, simple, and accurate measurement of cargo volume under a premise of not performing large modification on an assembly line itself. Therefore, the present invention has high stability and robustness, and reliable data can be obtained regardless of cargo placement position and placement orientation, and helps improve work efficiency.

For better understanding of the above technical solution, exemplary embodiments of the present invention are described in more detail below with reference to the drawings. Although exemplary embodiments of the present invention are shown in the drawings, it should be understood that the present invention may be implemented in various forms and should not be limited to the embodiments described here. On the contrary, the embodiments provided here are intended to more clearly and thoroughly illustrate the present invention and to fully convey the scope of the present invention to those skilled in the art.

Specifically, the present invention provides a real-time online identification method for cargo volume, including the following steps.

S1: acquiring, by a camera, a depth image and a color image of a set region including cargo.

The present invention uses an RGB-D camera of model Kinect V2 for shooting. The obtained depth image and infrared image have a resolution of 640×480, and an effective distance of approximately 0.3 m to 5 m. The captured RGB image is a four-channel image having a resolution of 1920×1080. Specific parameters of the RGB-D camera are shown in Table 1.

Table 1 Kinect v2 Parameter Table.

| Parameter Table | Typical Value |
|---|---|
| Color-camera resolution | 1920×1080 |
| Color-camera fps | 30fps |
| Depth-camera resolution | 640×480 |
| Depth-camera fps | 30fps |
| Horizontal detection angle | 90 degrees |
| Vertical detection angle | 70 degrees |

S2: introducing a median filter to remove noise pixels in the depth image, combining intrinsic and extrinsic parameters of the camera to align the color image and the filtered depth image, obtaining an aligned color image. Referring to FIG. 2, step S2 mainly implements median filtering of the depth image, calibration of intrinsic and extrinsic parameters of the depth camera and the color camera, and alignment of the processed depth image and the color image. Meanwhile, a color point cloud file can also be generated. Specifically, a point cloud file is generated based on the filtered depth image, and the point cloud is colored by using the aligned color image to obtain a color point cloud file.

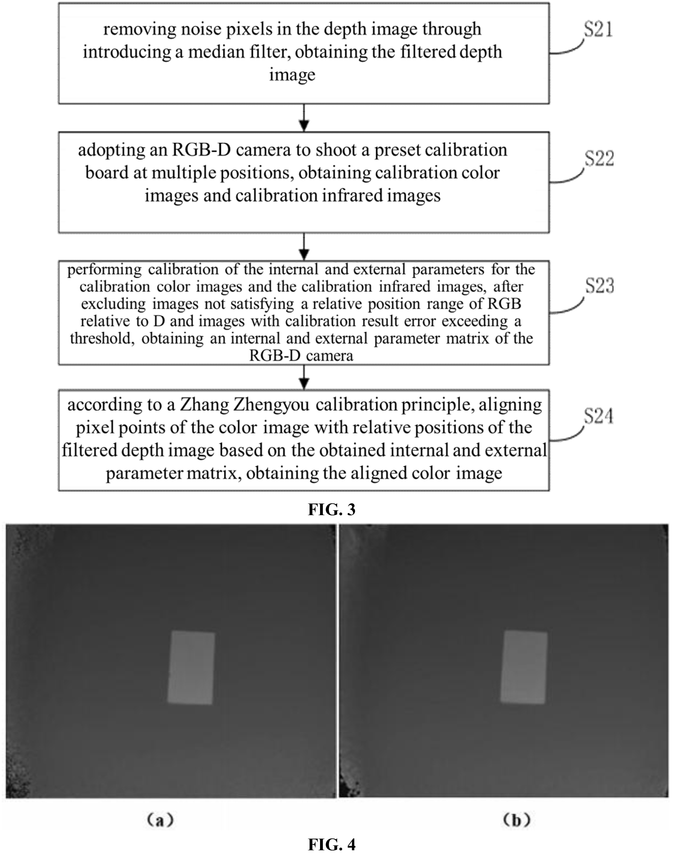

Optionally, as shown in FIG. 3, step S2 includes:
S21, removing noise pixels in the depth image through introducing a median filter, and obtaining the filtered depth image.

Since an original depth image contains edge noise, and a center position of the depth image may fail to acquire depth information, an effective filtering method is required for smoothing the depth image and eliminating noise.

A basic principle of median filtering is replacing a pixel value with a median of pixel values around the pixel so that the image becomes smoother. A specific definition of a median is as follows.

If $\{x_1 x_2 \ldots x_n\}$ is a sequence, and $\{x_1 x_2 \cdots x_n\}$ is arranged by size as: $x_{i1} \leq x_{i2} \leq x_{i3} \cdots \leq x_{in}$, then a median y of the sequence is:

$$y = \text{Med}\{x_1 x_2 \cdots x_n\} = \begin{cases} x_i\left(\frac{n+1}{2}\right) & n \text{ is an odd number} \\ \frac{1}{2}\left[x_i\left(\frac{n}{2}\right) + x_{i\left(\frac{n+1}{2}\right)}\right] & n \text{ is an even number} \end{cases} \quad (1).$$

When the sequence or pixels are one-dimensional, a median filtering method is implemented by using a one-dimensional sliding window, where a window size is an odd number. During window movement, values in the window are sorted to obtain the median, and the median is used to replace a pixel value at a center of the window, thereby implementing median filtering. Assuming an input sequence is $\{x_i, i \in I\}$, I is a natural-number set or subset, and a window length is n with $u = \frac{n+1}{2}$, then an output of the filter is:

$$y_i = Med\{x_i\} = \text{Med}\{x_{i-u} \cdots x_i \cdots x_{i+u}\} (2).$$

Herein, the median of a point $x_i$ is related only to medians of preceding and following pixels in the sliding window, and $y_i$ is the median of the sequence $x_i$.

By extending the concept of median filtering from one dimension to two dimensions, a simple sliding window in one dimension becomes a two-dimensional shape such as a circular shape, a square shape, or a rectangular shape. Thus, a two-dimensional median filter is defined as follows:

assuming that $\{x_{ij}, (i, j) \in I^2\}$ represents a gray-level value of each point of a digital image, A represents a filtering window, and $y_{ij}$ represents a median of the window A at a point $x_{ij}$, then:

$$y_{ij} = \underset{A}{Med} = \{x_{ij}\} = Med\{x_{(i+r),(j+s)}, (r, s) \in A, i, j, \in I^2\} \quad (3).$$

Expression (3) indicates a median expression of the window A at the point $x_{ij}$.

In an actual implementation, the present invention performs filtering by using an OpenCV library of Python. FIG. 4 shows effects before and after median filtering. Before filtering, noise exists at edge positions of the image, and many pixels on a cargo surface fail to acquire depth values due to environment or camera factors. After median filtering with a filter kernel size of 5, isolated noise points around the region are eliminated, and the image becomes smoother.

S22: adopting an RGB-D camera to shoot a set calibration board at multiple positions, and obtaining calibration color images and calibration infrared images.

Some pixel values can be obtained from the images, but actual-length correspondence of the pixel values cannot be determined. Camera calibration helps convert the pixel values into actual lengths, accurately calculate distances between objects, and unify coordinates of the depth image and the RGB image into a same coordinate system.

In a camera imaging system, the following four coordinate systems are generally involved: a world coordinate system, a camera coordinate system, an image coordinate system, and a pixel coordinate system. In generating a point cloud and aligning images, a conversion between the world coordinate system and the pixel coordinate system is involved. The world coordinate system is converted into the camera coordinate system through rigid-body transformation, and the camera coordinate system is converted into the image coordinate system through projection-perspective transformation. The image coordinate system is converted into the pixel coordinate system through affine transformation. A conversion relationship between the world coordinate system and the pixel coordinate system is as follows:

$$Z\begin{pmatrix} u \\ v \\ 1 \end{pmatrix} = \begin{pmatrix} \frac{1}{dX} & -\frac{\cot\theta}{dx} & u_0 \\ 0 & \frac{1}{dY\sin\theta} & v_0 \\ 0 & 0 & 1 \end{pmatrix} \begin{pmatrix} f & 0 & 0 & 0 \\ 0 & f & 0 & 0 \\ 0 & 0 & 1 & 0 \end{pmatrix} \begin{pmatrix} R & T \\ 0 & 1 \end{pmatrix} \begin{pmatrix} U \\ V \\ W \\ 1 \end{pmatrix} \quad (4),$$

where $(U, V, W)$ is a physical coordinate of a point in the world coordinate system, $(u, v)$ is a pixel coordinate of the point in the pixel coordinate system, and z is a scale factor.

S23: performing calibration of the intrinsic and extrinsic parameters for the calibration color images and the calibration infrared images, and after excluding images not satisfying a relative position range of RGB relative to D and images with calibration result error exceeding a threshold, obtaining an intrinsic and extrinsic parameter matrix of the RGB-D camera.

Then, the following matrix is referred to as an intrinsic-parameter matrix of the camera. The intrinsic-parameter matrix depends on intrinsic parameters of the camera:

$$\begin{pmatrix} \frac{1}{dX} & -\frac{\cot\theta}{dx} & u_0 \\ 0 & \frac{1}{dY\sin\theta} & v_0 \\ 0 & 0 & 1 \end{pmatrix} \begin{pmatrix} f & 0 & 0 & 0 \\ 0 & f & 0 & 0 \\ 0 & 0 & 1 & 0 \end{pmatrix} = \begin{pmatrix} \frac{f}{dX} & -\frac{f\cot\theta}{dx} & u_0 & 0 \\ 0 & \frac{f}{dY\sin\theta} & v_0 & 0 \\ 0 & 0 & 1 & 0 \end{pmatrix} \quad (5),$$

where $f$ is a focal length, $dx$ and $dY$ are physical lengths of a single pixel in X and Y directions on a camera photosensitive plate, respectively, $u_0$ and $v_0$ are coordinates of a center of the photosensitive plate in the pixel coordinate system, and $\theta$ is an angle between a transverse edge and a longitudinal edge of the photosensitive plate (where 90° indicates no error).

The matrix $\begin{pmatrix} R & T \\ 0 & 1 \end{pmatrix}$ is an extrinsic-parameter matrix of the camera. The extrinsic-parameter matrix is determined by a relative position between the camera coordinate system and the world coordinate system. R represents a rotation matrix, and T represents a translation vector. That is, a camera-imaging model of a single point without distortion is as follows:

$$Z\begin{pmatrix} u \\ v \\ 1 \end{pmatrix} = \begin{pmatrix} \frac{f}{dX} & -\frac{f\cot\theta}{dx} & u_0 & 0 \\ 0 & \frac{f}{dY\sin\theta} & v_0 & 0 \\ 0 & 0 & 1 & 0 \end{pmatrix} \begin{pmatrix} R & T \\ 0 & 1 \end{pmatrix} \begin{pmatrix} U \\ V \\ W \\ 1 \end{pmatrix} \quad (6),$$

The method for shooting the calibration plate at different positions, calculating intrinsic and extrinsic parameter matrices mainly includes three steps: solving a product of the intrinsic-parameter matrix and the extrinsic-parameter matrix, solving the intrinsic-parameter matrix, and solving the extrinsic-parameter matrix. A Camera Calibrator tool in Matlab R2022b can be used for calibrating intrinsic and extrinsic parameters of the color image and the infrared image, excluding images having excessive error in directions and excessively large calibration errors. Thus, intrinsic and extrinsic parameters of the color camera and the depth camera are obtained, and a rotation matrix and a translation vector from the depth camera to the color camera are calculated. After calibration, intrinsic and extrinsic parameters of the camera can be obtained. For extrinsic parameters of a same checkerboard, the two cameras have the following rigid-body transformation relationship:

$$R_{ir2rgb} = R_{rgb}R_{ir}^{-1} \quad (7);$$

and

$$T_{ir2rgb} = T_{rgb} - R_{ir2rgb}T_{ir} \quad (8).$$

S24: according to a Zhang Zhengyou calibration principle, aligning pixel points of the color image with relative positions of the filtered depth image based on the obtained intrinsic and extrinsic parameter matrix, obtaining the aligned color image.

A Zhang Zhengyou camera-calibration method is a camera-calibration method based on a single-plane checkerboard proposed by Professor Zhengyou Zhang in 1998. This method requires only a checkerboard, and intrinsic and extrinsic parameter values of the color camera and the depth camera can be calculated by shooting the checkerboard at different angles to obtain the color images and the infrared images. This method avoids a defect of conventional calibration methods requiring a high-precision three-dimensional calibration object, improves accuracy of calibration results, and simplifies the calibration process.

The Zhang Zhengyou calibration method fixes the world coordinate system on the checkerboard. Therefore, for any position on the checkerboard, a physical-coordinate height is 0, that is, W=0. A size of the checkerboard can be set when printing a calibration plate, and directions of an X-axis and a Y-axis can be fixed. Then, a physical coordinate (*U V W* = 0) of each corner point in the world coordinate system can be calculated. By using this information, intrinsic and extrinsic parameter matrices of the camera can be calibrated.

After obtaining intrinsic and extrinsic parameter matrices of the camera, the pixel points of the color image can be aligned to the depth image by using these parameters. A point cloud file can then be generated based on the depth image, and the point cloud can be colored by using the aligned color image. A coordinate-conversion formula from a pixel coordinate system to a world coordinate system is as follows:

$$\begin{cases} x_w = z_c \cdot (u - u_0) \cdot dx/f \\ y_w = z_c \cdot (v - v_0) \cdot dy/f \\ z_w = z_c \end{cases} \quad (9).$$

According to the Zhang Zhengyou calibration principle, pixel coordinates of a color image can be converted into the world coordinate system by using intrinsic and extrinsic parameters of a color camera and a depth camera, and then converted into a pixel coordinate system of a depth image. The present invention uses a NumPy library and an OpenCV library in Python to implement image alignment and color point-cloud generation.

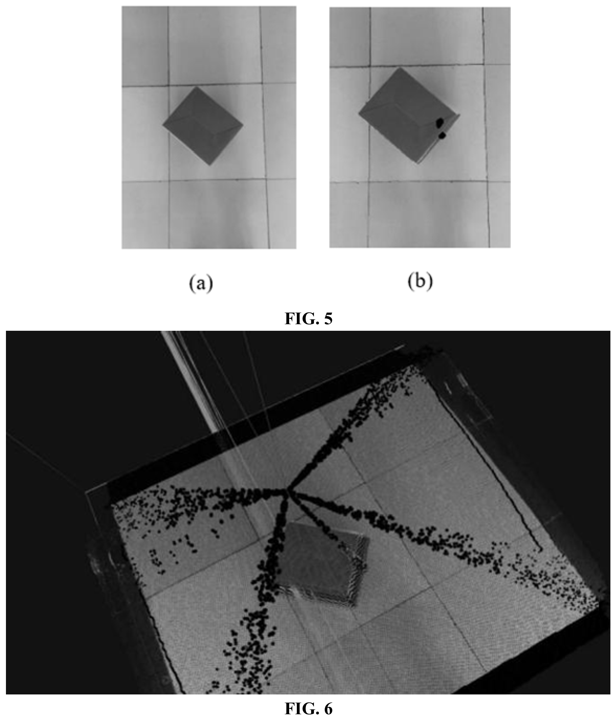

An original color image and an aligned color image correspond to (a) and (b) in FIG. 5, and an aligned color point-cloud file is shown in FIG. 6.

S3: performing instance segmentation on the aligned color image according to differences of color, illumination, grayscale and others between cargo and non-cargo through a pre-trained YOLACT model, and generating a cargo mask.

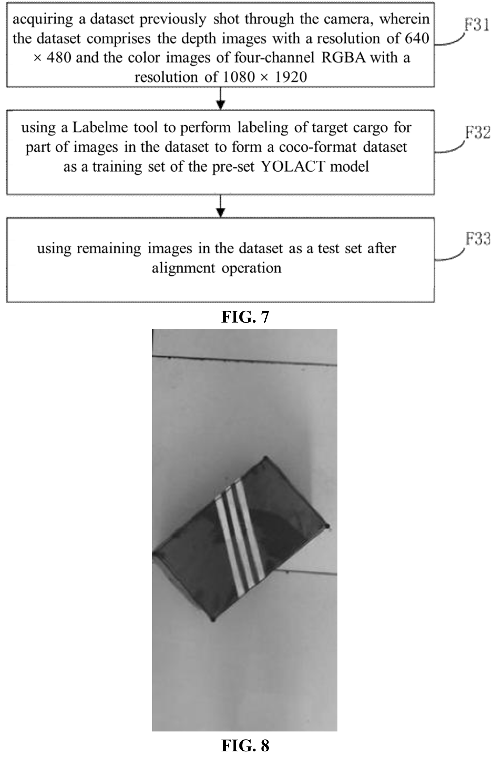

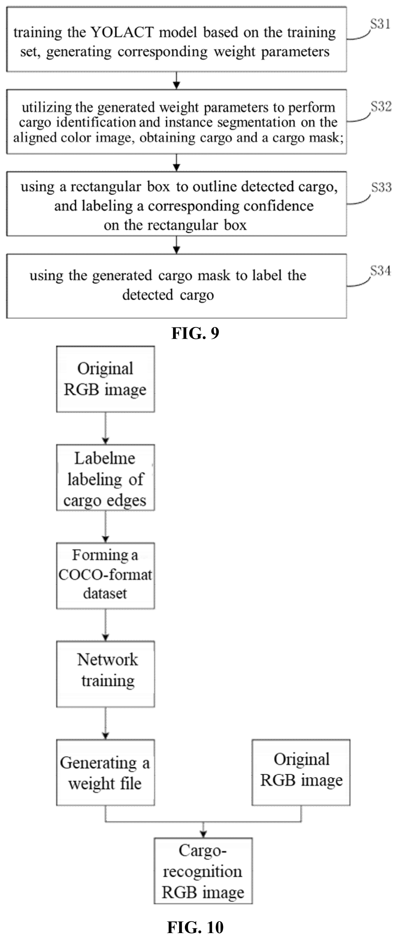

Optionally, before step S3, as shown in FIGS. 7 and 10, the method further includes:

F31, acquiring a dataset previously shot through the camera, wherein the dataset includes the depth images with a resolution of 640 × 480 and the color images of four-channel RGBA with a resolution of 1080 × 1920;
F32, using a Labelme tool to perform labeling of target cargo for part of images in the dataset to form a coco-format dataset as a training set of the pre-set YOLACT model; and
F33, using remaining images in the dataset excluding the training set as a test set of the pre-set YOLACT model after alignment operation, wherein quantities of the depth images and the color images in the training set and the test set are both 1: 1.

The present invention performs data acquisition by using an RGB-D depth camera to obtain the dataset. Depth-image acquisition is a PGM file having a resolution of 640×480, and color-image acquisition is a four-channel RGBA file having a resolution of 1080×1920 and stored in PNG format. A shooting environment simulates an industrial application environment, cargo is placed flat on the ground, and the cargo is shot from above by using the camera. A YOLACT model supports small-sample training. Therefore, about 1500 photos are acquired, and about 1200 photos are labeled by using Labelme as shown in FIG. 8, and these photos are used as a dataset for training the YOLACT model. Remaining 300 photos are used for testing after alignment.

Labelme is a commonly used image-labeling software and is capable of converting labeling structures into a COCO format, and the software is written in Python. Before labeling, collected RGBA photos need to be converted into an RGB format. For each photo to be labeled, a "Create Polygons" button on the left may be clicked to mark target cargo and to add a "goods" label. After labeling is completed, a label.txt file also needs to be compiled, and the label.txt file includes a background and used labels. Finally, the dataset is converted into the COCO format supported by YOLACT, and labelme2coco.py can be used in Labelme to implement the conversion.

Optionally, as shown in FIGS. 9 and 10, the step S3 includes:

S31, training the YOLACT model based on the training set, and generating corresponding weight parameters;
S32, utilizing the generated weight parameters to perform cargo identification and instance segmentation on the aligned color image, and obtaining cargo and a cargo mask;
S33, using a rectangular box to outline detected cargo, and labeling a corresponding confidence on the rectangular box; and
S34, using the generated cargo mask to mark the detected cargo.

Because a pipeline requires real-time data analysis, yolact is adopted for instance segmentation. YOLACT (You Only Look At CoefficienTs) is a first instance-segmentation model truly achieving real-time performance (greater than or equal to 30 fps). The YOLACT model adopts two branch networks to ensure speed. One of the branch networks is a Prediction Head branch and is used to generate confidence of each candidate-box type, a position of an anchor, and coefficients of a prototype mask. Another branch network is a Protonet, and the Protonet uses a lowest layer of an FPN as input to generate multiple prototype masks. The results of the two networks are segmented and binarized to obtain a final instance-segmentation result.

1. Preprocessing: the YOLACT model requires preprocessing of an input image, including adjusting the input image to a fixed size and performing normalization processing to allow a scale range to fall within a certain range.
2. Feature extractor: the YOLACT model uses a convolutional neural network named ResNet-101 to extract features of an input image. The network includes five convolutional layers having different sizes. This design allows the network to detect objects having different sizes.
3. Feature pyramid: after feature extraction is completed, YOLACT uses a feature-pyramid mechanism to process image features. The mechanism allows YOLACT to detect targets at different scales, to better adapt to targets having different sizes. P3, P4, and P5 layers of an FPN network correspond to C3, C4, and C5 of convolutional layers respectively. P3 is used as input data of the Protonet network, P6 is generated by performing convolution on P5, and P7 is generated by performing convolution on P6. Sizes and receptive fields of the layers are different, thereby allowing detection of objects having different sizes. Meanwhile, P3 to P7 are also delivered into the Prediction Head.
4. Prototype network: in a mask-prediction aspect of YOLACT, a ProtoNet model is adopted, and input of the ProtoNet model is P3 and output is a mask, and dimensions of the mask are 138×138×k, that is, k prototype masks having a size of 138×138.
5. Prediction Head: input of the Prediction Head comes from feature maps having different sizes in the FPN. For each feature map, convolution and upsampling operations are performed to increase resolution to a resolution of an original input image and to generate mask coefficient and bounding box.
6. Non-maximum suppression: after passing through the Prediction Head branch network, many anchors are generated. Some anchors may overlap or have low confidence. To ensure quality, the YOLACT model uses non-maximum suppression (NMS) to screen candidate boxes.
7. Mask merging: after NMS operations, surviving candidate boxes perform a mask-merging operation. By performing linear combination on results of the two branch networks, a mask of each target object in an image can be obtained.
8. Post-processing: a crop operation refers to setting parts outside a mask boundary to zero. A Threshold operation refers to performing binarization processing on a generated mask, and a threshold is 0.5.

It is worth mentioning that an experimental environment of the present invention is based on a Windows 10 operating system, Python version 3.7, CUDA version 11.7, and CUDNN version 8.7.0. A hardware environment uses a processor Inteli7 9750H, memory 8 GB DDR4 2666 MHz × 2, and a graphics card NVIDIA GeForce GTX 1660 Ti (6 GB).

In a network-training stage, ResNet101 is used as a backbone network. YOLACT training-parameter values are as follows. A batch-processing parameter is set to 2 and explicitly indicated when executing a command; a learning-rate parameter is set to (6000, 10000); and a maximum iteration-number parameter is set to 12000.

After network training is completed, corresponding weight parameters are generated.

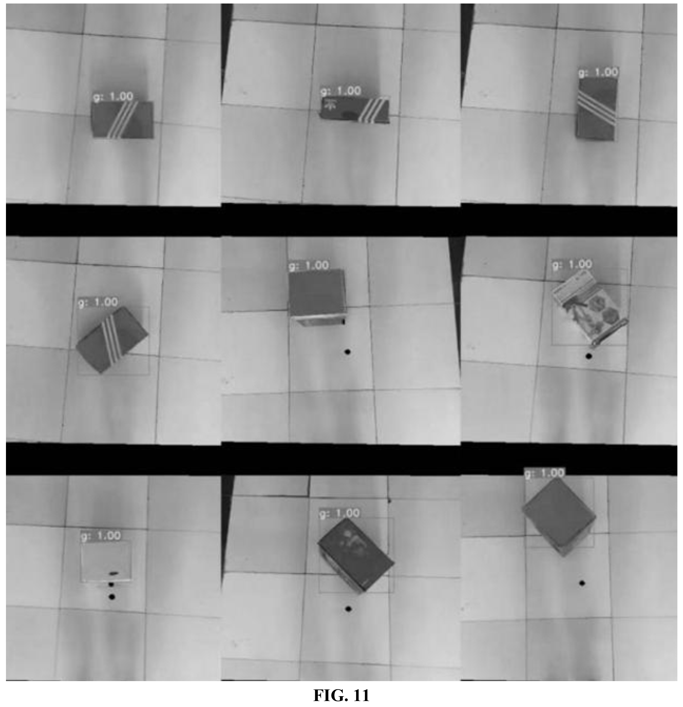

By using the generated weight parameters, the aligned RGB images are detected. The detection result is shown in FIG. 11, in which a rectangular box is used to indicate the detected object, and the corresponding confidence is labeled on the rectangular box. In addition, the detected object is marked using the generated mask as a red transparent overlay. The YOLACT model exhibits excellent performance in instance segmentation, and the recognition result substantially conforms to the actual boundary of the cargo. However, for some detected images, missing portions or deviations can occur at the boundary.

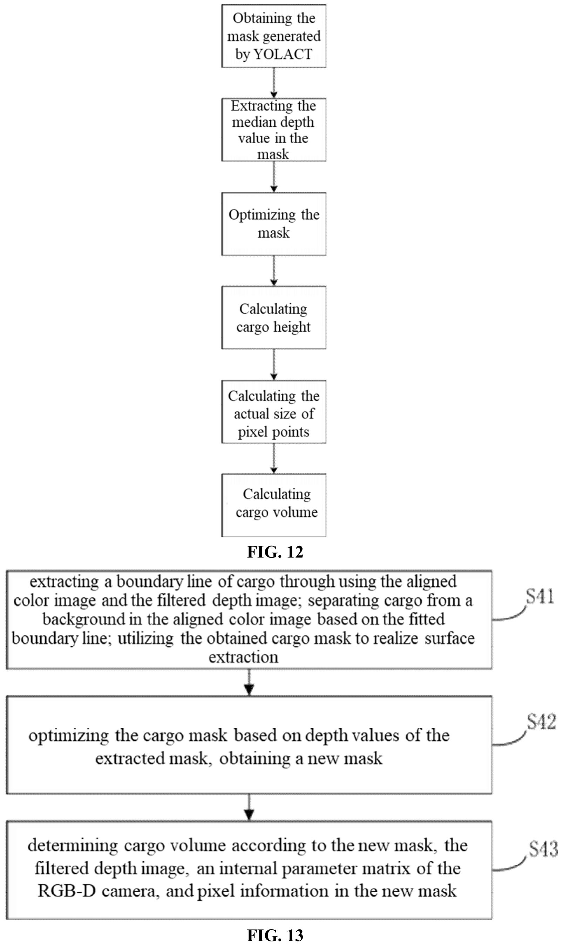

S4: utilizing the aligned color image, the filtered depth image, and a cargo mask to perform cargo edge fitting, surface extraction, and background separation, thereby realizing determination of cargo volume. The present invention mainly optimizes the upper-surface mask of the cargo based on the cargo mask obtained by YOLACT, calculates the distance from the camera to the cargo upper surface and the ground according to the depth map information, and then determines the area occupied by a single pixel in the aligned image based on the intrinsic parameters of the camera. The cargo volume is finally calculated, and the specific steps are shown in FIG. 12.

Optionally, as shown in FIG. 13, step S4 includes the following steps:

S41: extracting a boundary line of cargo through using the aligned color image and the filtered depth image; separating cargo from a background in the aligned color image based on the fitted boundary line; and utilizing the obtained cargo mask to realize surface extraction; and

S42: optimizing the cargo mask based on depth values of the extracted mask, and obtaining a new mask.

Optionally, the step S42 includes:

S421, initializing a numpy array with a same resolution as the depth image for storing the new mask;

S422, extracting all depth values of a mask portion in the depth image, and obtaining a median value of all depth values as an upper surface depth value of the cargo mask; and

S423, obtaining the new mask according to the numpy array and the upper surface depth value of the cargo mask.

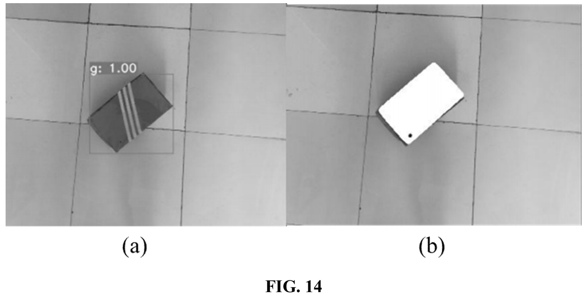

During instance segmentation by YOLACT, a mask corresponding to the cargo upper surface is generated. However, due to deviations between the aligned color image, the generated mask, and the depth map, the inherent noise in the depth map, and the failure to capture depth in the region near the camera center, the generated mask needs to be optimized. The specific procedure is as follows: first, initializing a numpy array with a same resolution as the depth image for storing the new mask; second, extracting the depth values in the masked portion of the depth map and taking the median of these values as the upper surface depth value of the cargo mask; and finally, determining a new mask based on the upper surface depth value. A comparison between the mask before optimization and the mask after optimization is shown in FIG. 14(a) and FIG. 14(b), in which the symbol g: 1.00 in FIG. 14 has the same meaning as in FIG. 11.

S43: determining cargo volume according to the new mask, the filtered depth image, an intrinsic parameter matrix of the RGB-D camera, and pixel information in the new mask.

Optionally, the step S43 includes:

S431, obtaining an actual distance between any two pixel points in the filtered depth image according to the new mask, the filtered depth image, and the intrinsic parameter matrix of the RGB-D camera;

S432, selecting two coordinate points in a longest continuous row in the new mask, calculating positions of the two coordinate points in a world coordinate system, and calculating the distance between the two coordinate points;

S433, dividing the distance between the two coordinate points by the number of non-zero pixel points between the two coordinate points to obtain length of each pixel;

S434, obtaining an area of each pixel according to the length of each pixel; and

S435, calculating a cargo volume based on the filtered depth image, intrinsic parameters of the depth camera, the number of non-zero pixel points in the new mask, heights of the non-zero pixel points, and the area of each pixel.

Based on the optimized mask, the depth map, and the intrinsic matrix of the RGB-D camera, the actual distance between any two pixels in the depth map can be calculated. First, two coordinate points are selected from the mask. These two points should lie on the same row that corresponds to the longest continuous row in the mask. Then, the positions of these two points in the world coordinate system are calculated, and the distance between them is obtained according to the Pythagorean theorem. Since the two points lie on the same plane, dividing the distance by the number of pixels yields the physical length represented by each pixel. This is further used to calculate the physical area of each pixel. Finally, the cargo volume is obtained based on the number of non-zero pixels in the mask, the height, and the area represented by each pixel.

In one specific embodiment, the same cargo is placed on the ground in different orientations for photographing and volume calculation, and the calculated volume is compared with the actual volume. The cargo has dimensions of 0.19 m $\times$ 0.155 m $\times$ 0.325 m and an approximate volume of 0.00957 m$^3$. It can be calculated that the average error of 16 sets of data is 0.65%. The result indicates that the applied volume-measurement algorithm provides high stability, and reliable data can be obtained regardless of the placement orientation of the cargo. In addition, the method is easy for workers to operate, and no specific placement orientation of the cargo is required, thereby improving work efficiency.

In addition, embodiments of the present invention provide a real-time online identification system for cargo volume, including:

an image acquisition module, configured to acquire, by a camera, a depth image and a color image of a set region including cargo;

a noise removal and image alignment module, configured to introduce a median filter to remove noise pixels in the depth image, combine intrinsic and extrinsic parameters of the camera to align the color image and the filtered depth image, and obtain an aligned color image and a color point-cloud file;

a model invoking and mask generation module, configured to perform instance segmentation on the aligned color image according to differences of color, illumination, grayscale and others between cargo and non-cargo through a pre-trained YOLACT model, and generate a cargo mask; and

a cargo volume calculation module, configured to utilize the aligned color image, the filtered depth image, and a cargo mask to perform cargo edge fitting, surface extraction, and background separation, so as to realize determination of cargo volume.

Mover, embodiments of the present invention provide a real-time online identification device for cargo volume, including: at least one database; an RGB-D depth camera, configured to acquire a depth image and a color image of a set region including cargo and transmit the images to the database; and a memory in communication connection with the at least one database. The memory stores instructions executable by the at least one database, and the instructions are executed by the at least one database to enable the at least one database to execute the real-time online identification method for cargo volume described above.

Meanwhile, embodiments of the present invention provide a computer-readable medium, wherein the computer-executable instructions are stored on the computer-readable medium, and the executable instructions, when executed by a processor, implement the real-time online identification method for cargo volume described above.

In summary, the present invention provides a real-time online cargo volume identification method, system, equipment, and medium. The present invention employs a self-developed RGB-D depth camera as a data acquisition tool to capture depth images and color images of cargo. A filtering technique is applied to remove noise in the depth map, and the filtered depth map and the color image are aligned to generate a color point-cloud file. The YOLACT model is then used to identify the object in the color image, and the edge and upper surface of the object are fitted based on the depth map and mask information, thereby realizing fast volume measurement of cargo on a production line.

Based on the above embodiments, the main implementations are as follows:

1. The Labelme tool is used to label K-level RGB cargo data to enable instance-level segmentation with a small amount of data for the resnet.

2. Based on the obtained recognized RGB cargo image, a median filter is introduced to remove noise pixels in the depth map, and RGB-D alignment is performed on the processed RGB image and the depth map according to the intrinsic and extrinsic parameters of the camera.

3. The YOLACT model is used to obtain a mask file. Then the mask is optimized based on depth information to fit the cargo surface. The cargo volume is finally calculated based on the size of a single pixel, the number of non-zero pixels, and the cargo height.

4. The method reaches a processing speed of up to 60 fps and achieves a detection accuracy higher than 1%, satisfying common requirements for logistics cargo volume measurement.

Since the system/device described in the above embodiments of the present invention is the system/device adopted to implement the method in the above embodiments of the present invention, a person skilled in the art can understand the specific structure and variations of the system/device based on the method described above, and therefore details are not further provided. Any system/device adopted by the method described in the above embodiments of the present invention falls within the protection scope of the present invention.

Those skilled in the art should understand that the embodiments of the present invention may be provided as a method, a system, or a computer program product. Therefore, the present invention may be implemented in the form of a completely hardware-based embodiment, a completely software-based embodiment, or an embodiment combining software and hardware aspects. Moreover, the present invention may be implemented in the form of a computer program product embodied on one or more computer-usable storage media containing computer-usable program code, where the computer-usable storage media includes but not limited to disk storage, CD-ROM, optical storage, etc.

The present invention is described with reference to flowcharts and/or block diagrams of methods, device (systems), and computer program products according to embodiments of the present invention. It should be understood that each flow and/or block shown in the flowchart and/or block diagram can be implemented by computer program instructions.

It should be noted that the expressions "a" or "an" before a component do not exclude the existence of multiple such components. The present invention may be implemented by hardware containing several components and by a computer properly programmed. The terms first, second, third, and similar expressions are used merely for convenience of description and do not indicate any order. These terms may be understood as part of the component names.

Moreover, the expressions "an embodiment", "some embodiments", "embodiments", "an example", "specific example", or "some examples" indicate that the specific features, structures, materials, or characteristics described in connection with the embodiment or example are included in at least one embodiment or example of the present invention. The indicative expression of these terms does not necessarily refer to the same embodiment or example. Furthermore, the described features, structures, materials, or characteristics may be combined in any suitable manner in one or more embodiments or examples. In addition, as long as no contradiction exists, a person skilled in the art may combine and integrate different embodiments or examples and the features of different embodiments or examples described in the present specification.

Although preferred embodiments of the present invention have been described, once those skilled in the art become aware of the basic inventive concept, they may make additional changes and modifications to these embodiments. Therefore, the claims should be interpreted to include the optional embodiments and all modifications and changes falling within the scope of the present invention.

Clearly, those skilled in the art can make various alterations and modifications to the present invention without departing from the spirit and scope of the present invention. Thus, if these modifications and variations of the present invention belong to the scope of the present invention and equivalent technologies thereof, the present invention should also include these modifications and variations.

**Claims**

1. A real-time online identification method for cargo volume, **characterized by** comprising steps of:

   acquiring, by a camera, a depth image and a color image of a set region comprising cargo;
   introducing a median filter to remove noise pixels in the depth image, combining intrinsic and extrinsic parameters of the camera to align the color image and a filtered depth image, and obtaining an aligned color image;
   performing instance segmentation on the aligned color image according to differences of color, illumination, and grayscale between the cargo and a non-cargo object using a pre-trained YOLACT model, and generating a cargo mask; and
   utilizing the aligned color image, the filtered depth image, and a cargo mask to perform edge fitting, surface extraction, and background separation of the cargo, so as to realize determination of cargo volume.

2. The real-time online identification method for cargo volume according to claim 1, the step of introducing a median filter to remove noise pixels in the depth image, combining intrinsic and extrinsic parameters of the camera to align the color image and a filtered depth image, and obtaining an aligned color image, comprises:

   removing the noise pixels in the depth image through introducing the median filter, and obtaining the filtered depth image;
   adopting an RGB-D camera to shoot a set calibration board at multiple positions, and obtaining calibration color images and calibration infrared images;
   performing calibration of the intrinsic and extrinsic parameters for the calibration color images and the calibration infrared images, and after excluding images not satisfying a relative position range of RGB relative to D and images with calibration result error exceeding a threshold, obtaining an intrinsic and extrinsic parameter matrix of the RGB-D camera; and
   aligning, according to Zhang Zhengyou calibration principle, pixel points of the color image with relative positions of the filtered depth image based on an obtained intrinsic and extrinsic parameter matrix, and obtaining the aligned color image.

3. The real-time online identification method for cargo volume according to claim 1, wherein before the step of performing instance segmentation on the aligned color image according to differences of color, illumination, and grayscale between the cargo and a non-cargo object using a pre-trained YOLACT model, and generating a cargo mask, the method further comprises:

   acquiring a dataset previously shot through the camera;
   using a Labelme tool to perform labeling of target cargo for part of images in the dataset, to form a coco-format dataset as a training set of a pre-set YOLACT model; and
   using remaining images in the dataset excluding the training set, after alignment operation, as a test set of the pre-set YOLACT model, wherein
   the dataset comprises the depth images with a resolution of $640 \times 480$ and the color images of four-channel RGBA with a resolution of $1080 \times 1920$, and the number of the depth images and the color images in both the training set and the test set is 1:1.

4. The real-time online identification method for cargo volume according to claim 3, wherein the step of performing instance segmentation on the aligned color image according to differences of color, illumination, and grayscale between the cargo and a non-cargo objection using a pre-trained YOLACT model, and generating a cargo mask comprises:

   training the YOLACT model based on the training set, and generating corresponding weight parameters;
   utilizing generated weight parameters to perform cargo identification and instance segmentation on the aligned color image, obtaining the cargo and the cargo mask;
   using a rectangular box to outline detected cargo, and labeling a corresponding confidence on the rectangular box; and
   using generated cargo mask to mark the detected cargo.

5. The real-time online identification method for cargo volume according to claim 2, wherein the step of utilizing the aligned color image, the filtered depth image, and a cargo mask to perform edge fitting, surface extraction, and background separation of the cargo, so as to realize determination of cargo volume comprises steps of:

extracting a boundary line of the cargo using the aligned color image and the filtered depth image;
separating the cargo from a background in the aligned color image based on a fitted boundary line;
utilizing an obtained cargo mask to realize surface extraction;
optimizing the cargo mask based on depth values of an extracted mask, and obtaining a new mask; and
determining cargo volume according to the new mask, the filtered depth image, an intrinsic parameter matrix of the RGB-D camera, and pixel information in the new mask.

6. The real-time online identification method for cargo volume according to claim 5, wherein the step of optimizing the cargo mask based on depth values of an extracted mask, and obtaining a new mask comprises:

initializing a numpy array with a same resolution as the depth image for storing the new mask;
extracting all depth values of a mask portion in the depth image, obtaining a median value of all depth values as an upper surface depth value of the cargo mask; and
obtaining the new mask according to the numpy array and the upper surface depth value of the cargo mask.

7. The real-time online identification method for cargo volume according to claim 5, wherein the step of determining cargo volume according to the new mask, the filtered depth image, an intrinsic parameter matrix of the RGB-D camera, and pixel information in the new mask comprises:

obtaining an actual distance between any two pixel points in the filtered depth image according to the new mask, the filtered depth image, and the intrinsic parameter matrix of the RGB-D camera;
selecting two coordinate points in a longest continuous row in the new mask, calculating positions of the two coordinate points in a world coordinate system, and calculating the distance between the two coordinate points;
dividing the distance between the two coordinate points by the number of non-zero pixel points therebetween to obtain a length of each pixel;
obtaining an area of each pixel according to the length of each pixel; and
calculating a volume of the cargo based on the filtered depth image and intrinsic parameters of the depth camera, combined with the number of non-zero pixel points in the new mask, heights of the non-zero pixel points, and the area of each pixel.

8. A real-time online identification system for cargo volume, **characterized by** comprising:

an image acquisition module, configured to acquire, by a camera, a depth image and a color image of a set region comprising cargo;
a noise removal and image alignment module, configured to introduce a median filter to remove noise pixels in the depth image, combine intrinsic and extrinsic parameters of the camera to align the color image and the filtered depth image, and obtain an aligned color image;
a model invoking and mask generation module, configured to perform instance segmentation on the aligned color image according to differences of color, illumination, and grayscale between the cargo and a non-cargo object using a pre-trained YOLACT model, and generate a cargo mask; and
a cargo volume calculation module, configured to utilize the aligned color image, the filtered depth image, and a cargo mask to perform edge fitting, surface extraction, and background separation of the cargo, so as to realize determination of cargo volume.

9. A real-time online identification device for cargo volume, **characterized by** comprising:

at least one database;
an RGB-D depth camera, configured to acquire a depth image and a color image of a set region comprising cargo and transmit them to the database; and
a memory in communication connection with the at least one database, wherein
the memory stores instructions executable by the at least one database, and the instructions are executed by the at least one database to enable the at least one database to perform the real-time online identification method for cargo volume according to any one of claims 1-7.

10. A computer-readable medium, **characterized by** storing computer-executable instructions thereon, wherein the executable instructions, when executed by a processor, realize the real-time online identification method for cargo volume according to any one of claims 1-7.

acquiring a depth image and a color image of a preset region comprising cargo through a camera — S1

introducing a median filter to remove noise pixels in the depth image, combining internal and external parameters of the camera to align the color image and the filtered depth image, obtaining an aligned color image — S2

performing instance segmentation on the aligned color image according to differences of color, illumination, grayscale and others between cargo and non-cargo through a pre-trained YOLACT model, and generating a cargo mask — S3

utilizing the aligned color image, the filtered depth image, and a cargo mask to perform cargo edge fitting, surface extraction, and background separation, thereby realizing determination of cargo volume — S4

**FIG. 1**

Shooting the calibration board

Original depth image

Performing intrinsic and extrinsic calibration

5*5 median filtering

Transforming color-image coordinates to depth-image coordinates

Generating the color point-cloud file

**FIG. 2**

| | |
|---|---|
| removing noise pixels in the depth image through introducing a median filter, obtaining the filtered depth image | S21 |

↓

| | |
|---|---|
| adopting an RGB-D camera to shoot a preset calibration board at multiple positions, obtaining calibration color images and calibration infrared images | S22 |

↓

| | |
|---|---|
| performing calibration of the internal and external parameters for the calibration color images and the calibration infrared images, after excluding images not satisfying a relative position range of RGB relative to D and images with calibration result error exceeding a threshold, obtaining an internal and external parameter matrix of the RGB-D camera | S23 |

↓

| | |
|---|---|
| according to a Zhang Zhengyou calibration principle, aligning pixel points of the color image with relative positions of the filtered depth image based on the obtained internal and external parameter matrix, obtaining the aligned color image | S24 |

**FIG. 3**

(a)　　　　　　　　　　　　　　(b)

**FIG. 4**

(a)                 (b)

**FIG. 5**

**FIG. 6**

acquiring a dataset previously shot through the camera, wherein the dataset comprises the depth images with a resolution of 640 × 480 and the color images of four-channel RGBA with a resolution of 1080 × 1920

F31

using a Labelme tool to perform labeling of target cargo for part of images in the dataset to form a coco-format dataset as a training set of the pre-set YOLACT model

F32

using remaining images in the dataset as a test set after alignment operation

F33

**FIG. 7**

**FIG. 8**

training the YOLACT model based on the training set, generating corresponding weight parameters ⟍S31

utilizing the generated weight parameters to perform cargo identification and instance segmentation on the aligned color image, obtaining cargo and a cargo mask; ⟍S32

using a rectangular box to outline detected cargo, and labeling a corresponding confidence on the rectangular box ⟍S33

using the generated cargo mask to label the detected cargo ⟍S34

**FIG. 9**

Original RGB image

↓

Labelme labeling of cargo edges

↓

Forming a COCO-format dataset

↓

Network training

↓

Generating a weight file          Original RGB image

↓

Cargo-recognition RGB image

**FIG. 10**

**FIG. 11**

Obtaining the
mask generated
by YOLACT

↓

Extracting the
median depth
value in the
mask

↓

Optimizing the
mask

↓

Calculating
cargo height

↓

Calculating the
actual size of
pixel points

↓

Calculating
cargo volume

**FIG. 12**

extracting a boundary line of cargo through using the aligned color image and the filtered depth image; separating cargo from a background in the aligned color image based on the fitted boundary line; utilizing the obtained cargo mask to realize surface extraction — S41

↓

optimizing the cargo mask based on depth values of the extracted mask, obtaining a new mask — S42

↓

determining cargo volume according to the new mask, the filtered depth image, an internal parameter matrix of the RGB-D camera, and pixel information in the new mask — S43

**FIG. 13**

(a)          (b)

**FIG. 14**

## INTERNATIONAL SEARCH REPORT

| International application No. |
|---|
| **PCT/CN2024/103937** |

**A. CLASSIFICATION OF SUBJECT MATTER**

G06T 7/62(2017.01)i; G06V 10/26(2022.01)i

According to International Patent Classification (IPC) or to both national classification and IPC

**B. FIELDS SEARCHED**

Minimum documentation searched (classification system followed by classification symbols)

IPC: G06T, G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 货物, 物体, 包裹, 体积, 识别, 测量, 计算, 深度图像, 彩色图像, 分割, 掩码, 标定, 背景, cargo, object, package, volume, recognition, measure, calculate, depth image, color image, segment, mask, calibration, background

**C. DOCUMENTS CONSIDERED TO BE RELEVANT**

| Category* | Citation of document, with indication, where appropriate, of the relevant passages | Relevant to claim No. |
|---|---|---|
| PX | CN 116758136 A (HANGZHOU LANXIN TECHNOLOGY CO., LTD.) 15 September 2023 (2023-09-15) <br> claims 1-10 | 1-10 |
| Y | CN 109785379 A (CHANGCHUN INSTITUTE OF OPTICS, FINE MECHANICS AND PHYSICS, CHINESE ACADEMY OF SCIENCES) 21 May 2019 (2019-05-21) <br> description, paragraphs [0007]-[0043] and [0056]-[0106] | 1-4, 8-10 |
| Y | CN 110675346 A (WUHAN UNIVERSITY OF SCIENCE AND TECHNOLOGY) 10 January 2020 (2020-01-10) <br> description, paragraphs [0005]-[0009] | 1-4, 8-10 |
| Y | CN 114155434 A (SHENZHEN YIJIAHE TECHNOLOGY RESEARCH AND DEVELOPMENT CO., LTD.) 08 March 2022 (2022-03-08) <br> description, paragraphs [0007]-[0019] and [0030]-[0058] | 1-4, 8-10 |
| A | CN 107067431 A (CHANGZHOU CAMPUS OF HOHAI UNIVERSITY) 18 August 2017 (2017-08-18) <br> entire document | 1-10 |

☑ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **15 October 2024** | **23 October 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/103937**

**C.      DOCUMENTS CONSIDERED TO BE RELEVANT**

| Category* | Citation of document, with indication, where appropriate, of the relevant passages | Relevant to claim No. |
|---|---|---|
| A | US 2021319582 A1 (DAIMLER AG) 14 October 2021 (2021-10-14)<br>entire document | 1-10 |

**INTERNATIONAL SEARCH REPORT**
Information on patent family members

International application No.

**PCT/CN2024/103937**

| Patent document cited in search report | | | Publication date (day/month/year) | Patent family member(s) | | | Publication date (day/month/year) |
|---|---|---|---|---|---|---|---|
| CN | 116758136 | A | 15 September 2023 | None | | | |
| CN | 109785379 | A | 21 May 2019 | None | | | |
| CN | 110675346 | A | 10 January 2020 | AU | 2020101832 | A4 | 24 September 2020 |
| CN | 114155434 | A | 08 March 2022 | None | | | |
| CN | 107067431 | A | 18 August 2017 | None | | | |
| US | 2021319582 | A1 | 14 October 2021 | DE | 102018006765 | A1 | 27 February 2020 |
| | | | | DE | 102018006765 | B4 | 25 February 2021 |
| | | | | US | 12080015 | B2 | 03 September 2024 |
| | | | | WO | 2020043350 | A1 | 05 March 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311047066

**Non-patent literature cited in the description**

- **YU HAO et al.** A Three-Dimensional Measurement Method for Binocular Endoscope Based on Deep Learning (English). *Frontiers of Information Technology & Electronic Engineering*, 2022
- **QIU RUICHENG et al.** A Maize Plant Height Measurement Method Based on RGB-D Camera. *Transactions of the Chinese Society for Agricultural Machinery*, 2017
- **ELISE LACHAT et al.** Assessment and Calibration of a RGB-D Camera (Kinect v2 Sensor) Towards a Potential Use for Close-Range 3D Modeling. *Remote Sensing*